# EUROPEAN PATENT SPECIFICATION

(11) **EP 3 994 401 B1**
(45) Date of publication and mention of the grant of the patent: **28.02.2024**
(21) Application number: 20742562.0
(22) Date of filing: 25.06.2020
(51) Int. Cl.: F25B 21/04, F25B 25/00, F25B 49/00

(54) **REFRIGERATION UNIT**
KÜHLEINHEIT
UNITÉ DE RÉFRIGÉRATION

(30) Priority: 02.07.2019 CN 201910589095
(43) Date of publication of application: 11.05.2022
(73) Proprietor: Carrier Corporation, Palm Beach Gardens, FL 33418 (US)
(72) Inventor: CHEN, Linhui, Pudong District Shangai 201206 (CN); MI, Tingcan, Pudong District Shangai 201206 (CN)
(74) Representative: Dehns
(86) International application number: PCT/US2020/039589
(87) International publication number: WO 2021/003053

(56) References cited:
- WO-A2-2013/095895
- US-A1- 2007 101 737
- US-A1- 2014 123 695

## Description

The present invention relates to a refrigeration unit with a heat recovery system. A heat recovery system is disclosed that is intended to utilize the temperature difference in the refrigeration unit to at least partially recover energy, so as to improve the operating efficiency of the refrigeration unit.

Refrigeration units are widely used in production and living facilities that require the production of cooling quantity. For example, refrigeration units may be deployed onto moving vehicles, so as to provide Transportation Refrigeration Units (TRU). Transport refrigeration units are typically used to provide moving refrigeration or chilling environments. The refrigeration unit usually includes at least a compressor, an evaporator, a thermal expansion valve, and a condenser. When a conventional refrigeration unit is operating in the refrigeration mode, the power consumed by the compressor and the heat absorbed from the evaporator is discharged from the condenser into the surroundings. In a conventional refrigeration unit, approximately 30% of the heat generated by the combustion of the engine fuel is discharged into the surroundings when the refrigeration unit is actuated by the engine. The discharged heat is not fully utilized.

Accordingly, there is a continuing focus in the art for increasing the operating efficiency of the refrigeration unit. It is desirable that new solutions can improve the refrigeration efficiency of the refrigeration unit.

According to US2007101737A1, it is known to provide a vapor-compression circuit in which excess heat generated in the vapor-compression circuit is utilized to generate an electric current that may power other components of the vapor-compression circuit.

According to US2014123695A1, it is known to provide a power-generating system comprising an energy-converting module that converts non-electrical waste energy generated by one or more components of an HVAC system into electrical energy, and, a control module that directs the electrical energy to one or more electricity-consuming components of the HVAC system. US2014123695 A1 discloses a refrigeration unit according to the preamble of claim 1.

According to WO2013095895, it is known to provide a transport refrigeration system for controlling temperature within a cargo box during transit including a refrigerant vapor compression unit and a power supply system including a fossil-fueled engine and a thermoelectric generator.

One aspect of the present application aims to provide a refrigeration unit with a heat recovery system that is intended to increase the operating efficiency of the refrigeration unit by recovering condensation heat.

According to an aspect of the invention, there is provided a refrigeration unit according to claim 1.

In the refrigeration unit described above, optionally, the heat recovery system is further configured to conduct refrigeration with the thermoelectric module, so as to reduce the temperature of the ambient air on the upstream side of the condenser coil.

In the refrigeration unit described above, optionally, the thermoelectric module is configured to be arranged about the perimeter of the condenser coil.

The disclosed refrigeration unit with the heat recovery system has the advantages of being simple in structure, convenient to use, high in operation efficiency and the like. By employing the disclosed refrigeration unit, thermal energy can be at least partially recycled for the operation of the refrigeration unit, so as to improve the refrigeration efficiency.

The present invention will now be described below by way of example only in further detail in connection with the accompanying drawings and the preferred embodiments. Those skilled in the art will appreciate that these drawings are drawn for the purpose of illustrating preferred embodiments only, and therefore should not be taken as limiting to the scope of the present claims. In addition, unless particularly specified, the drawings are only intended to conceptually represent the composition or construction of the objects described, and may include exaggerated illustration. The figures are also not necessarily drawn to scale.
FIG. 1 is a structural schematic view of a refrigeration unit;
FIG. 2 is a partial structural schematic view of one embodiment of a refrigeration unit according to the present invention;
FIG. 3 is a partial structural schematic view of a refrigeration unit; and
FIG. 4 is a structural schematic view of another a refrigeration unit.

Preferred embodiments will be described in detail below with reference to the attached drawings. Those skilled in the art will appreciate that: these descriptions are merely descriptive, exemplary, and should not be construed as limiting the protective scope of the claims.

Firstly, it is to be noted that the top, bottom, upward, downward, and other directional terms mentioned herein are defined with respect to the orientation in the various figures. They are relative concepts and thus can vary depending on the different positions and the different utility conditions they are in. Therefore, these and other directional terms should not be construed as limiting terms.

In addition, it should also be noted that for any single technical feature described or implied in the embodiments herein, or any single technical feature shown or implied in the drawings, these technical features (or equivalents thereof) may still be continued to be combined, thereby obtaining other embodiments that are not directly mentioned herein.

It should be noted that, like reference numerals designate identical or substantially identical assemblies in different drawings.

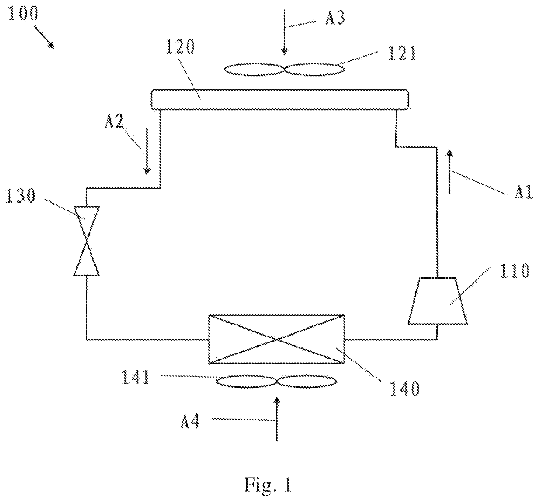

FIG. 1 is a structural schematic view of a refrigeration unit. For purposes of clarity, the heat recovery system according to the disclosure is not shown in FIG. 1. The refrigeration unit 100 includes a refrigeration circuit that typically includes a compressor 110, a condenser 120, a thermal expansion valve 130, and an evaporator 140 connected into a loop. Working fluid is provided within the circuit. In the illustrated embodiment, the working fluid travels generally in a counter-clockwise direction. For example, the working fluid exits the compressor 110 in the direction shown by arrow A1 and enters the condenser 120. The condenser 120 is provided with a first fan 121; the first fan 121 rotates to provide ambient air. The ambient air may flow in the direction shown by arrow A3 and thus establish a thermal connection (i.e., heat exchange) with the condenser 120 and the working fluid therein. The working fluid then exits the condenser 120 in the direction shown by arrow A2.

As used herein, "establishing a thermal connection" refers to the presence of a direct heat exchange relationship and continuous heat exchanging could be conducted.

Similarly, the evaporator 140 may also be provided with an evaporator fan 141 that rotates to provide a flow of working gas. The working gas may flow in the direction shown by arrow A4 and thus establish a thermal connection (i.e., heat exchange) with the evaporator 140 and the working fluid therein. In one embodiment, the refrigeration unit 100 may be a transport refrigeration unit disposed on a movable vehicle for controlling the temperature of air within the vehicle refrigeration compartment.

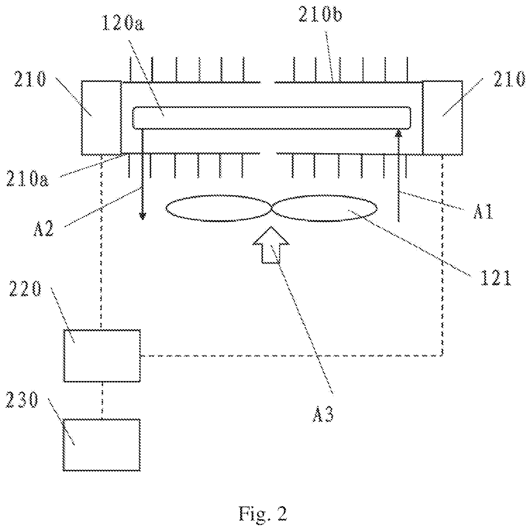

As shown in FIG. 2, the refrigeration unit also includes a heat recovery system. The heat recovery system includes a thermoelectric module 210, a control module 220, and a battery 230. The thermoelectric module 210 includes a first side 210a and a second side 210b. The first side 210a is disposed to establish a thermal connection with the first heat source, and the second side 210b is disposed to establish a thermal connection with the second heat source. The first heat source and the second heat source have different temperatures. The thermoelectric module 210 is also configured to generate electricity by a temperature difference between the first heat source and the second heat source. The thermoelectric module may employ any known temperature difference power generation device suitable for the application. The control module 220 is configured to store the power generated by the thermoelectric module 210 to the battery 230, which may be configured to drive the refrigeration circuit 100. For example, the battery 230 may be applied to directly or indirectly drive one or more of the compressor 110, the first fan 121, or the evaporator fan 141.

Further, the thermoelectric module 210 may be further configured to perform a refrigeration operation in order to receive heat through the thermal connection between the first heat source and/or the second heat source, so as to change the temperature of the first heat source and/or the second heat source as desired.

FIG. 2 is a partial structural schematic view of one embodiment of the refrigeration unit. The condenser 120 includes a condenser coil 120a and a first fan 121. The first fan 121 is configured to deliver ambient air through the condenser coil 120a. The working fluid enters and exits the condenser coil 120a in the direction shown by arrows A1 and A2. Specifically, the ambient air moves in the direction shown by arrow A3, so as to provide the flow path for the ambient air. The first side 210a and the second side 210b of the thermoelectric module 210 are disposed adjacent to the first heat source and the second heat source, respectively. The first heat source and the second heat source are located on the flow path of ambient air and are located on the upstream and downstream sides of the condenser coil 120a, respectively.

The upstream side, as referred to herein, refers to the location at which the upstream of the flow path of the fluid is located, and the downstream side refers to the location at which the downstream of the flow path of the fluid is located. For example, in FIG. 2, since ambient air as a fluid is schematically shown as flowing from bottom to top, the upstream side of the condenser coil 120a refers to the lower side of the condenser coil 120a and the downstream side of the condenser coil 120a refers to the upper side of the condenser coil 120a.

As the ambient air flows through the condenser coil 120a in the direction shown by arrow A3, the ambient air will establish a thermal connection and perform heat exchange with the working fluid within the condenser coil 120a. Specifically, the ambient air at the upstream side of the condenser coil 120a will have a lower temperature, while the ambient air at the downstream side of the condenser coil 120a will have a higher temperature. Thus, the temperature of the first heat source will be substantially lower than the temperature of the second heat source, thereby establishing a temperature difference between the first side 210a and the second side 210b of the thermoelectric module 210. The thermoelectric module will thus generate power. At this point, the temperature at the first side 210a will be substantially lower than the temperature at the second side 210b. Thus, in the embodiment shown in FIG. 2, the first side 210a is also referred to as a cold side, and the second side 210b is also referred to as a hot side.

The dashed lines shown in FIGS. 2, 3, and 4 are intended to represent the wires used to deliver power. The power generated by the thermoelectric module 210 is collected by the wires in FIG. 2 to the control module 220. The power generated by the thermoelectric modules may be in the form of direct current and subsequently stored into the battery 230.

In addition, the heat recovery system may further be configured to perform refrigeration using the thermoelectric module 210, so as to reduce the temperature of the ambient air on the upstream side of the condenser coil 120a. In this case, the battery 230 is also configured to drive the thermoelectric module 210 such that the thermoelectric module 210 produces a refrigeration effect, thereby reducing the temperature of the ambient air on the upstream side of the condenser coil 120a. This function can be used in situations where the refrigeration capacity of the refrigeration unit is insufficient. For example, the refrigeration capacity of the condenser coil 120a may be insufficient when rapid cooling is required over a limited period of time. With the auxiliary refrigeration operation of the thermoelectric module 210, rapid cooling operation could be facilitated.

In the illustrated embodiment, the thermoelectric module 210 is configured to be disposed about the perimeter of the condenser coil 120a. The thermoelectric modules 210 may also be arranged in other structures or configurations according to the actual requirement.

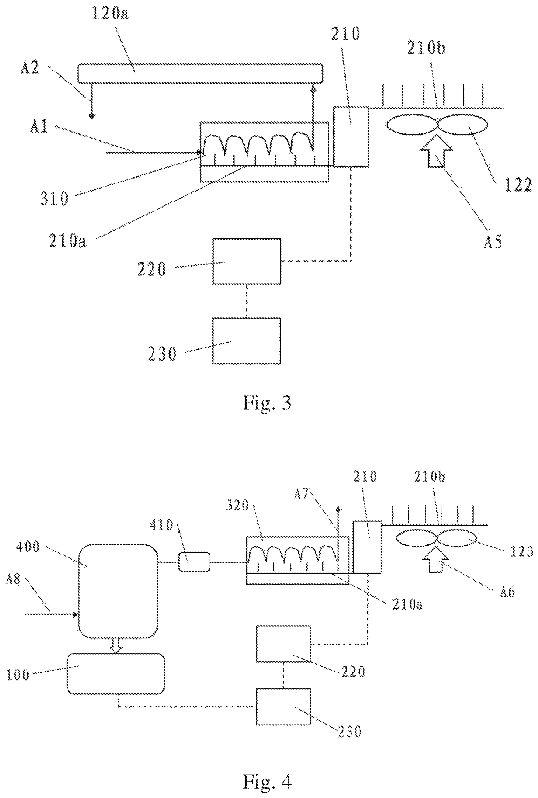

FIG. 3 is a partial structural schematic view of an example of a refrigeration unit. In the illustrated example, the first heat source for the thermoelectric module 210 is a discharge line of a compressor (not shown) and the second heat source is the ambient air. The first heat source establishes a thermal connection with the thermoelectric module 210 through the first heat exchanger 310. The ambient air establishes a thermal connection with the thermoelectric module through the second fan 122.

Specifically, as shown in FIG. 3, the discharge line of the compressor (not shown) is connected to the input side of the condenser coil 120a, and the working fluid flows in the discharge line, as shown by arrow A1. By installing the first heat exchanger 310 on the discharge line, mounting the first side 210a of the thermoelectric module 210 adjacent to the first heat exchanger 310, and disposing the second side 210b of the thermoelectric module 210 adjacent to the ambient air, a temperature difference may be obtained between both sides of the thermoelectric module 210. When the refrigeration unit is in operation, the temperature of the discharge side of the refrigeration unit is always substantially higher than the temperature of the ambient air, so it is possible to establish a stable temperature difference. The thermoelectric module 210 generates power with the temperature difference described above, and the power is stored and utilized by the control module 220 and the battery 230. At this point, the temperature at the first side 210a will be substantially higher than the temperature at the second side 210b. Thus, in the example shown in FIG. 3, the first side 210a is also referred to as the hot side, and the second side 210b is also referred to as the cold side.

In one example, the thermoelectric module 210 is also operable to provide cooling capacity to the working fluid in the discharge line, so as to achieve the desired temperature regulation purpose. For example, the temperature of the working fluid may be reduced, thereby facilitating the operation of the condenser 120.

The ambient air may be driven by the second fan 122. The second fan 122 may be a fan disposed outside the housing of the refrigeration unit, or a suitable fan in the refrigeration unit could be multiplexed to implement the function of the second fan 122.

FIG. 4 is a structural schematic view of another example of a refrigeration unit. The first heat source for the thermoelectric module 210 is the discharge gas of the internal combustion engine and the second heat source is the ambient air.

In the example shown in FIG. 4, the refrigeration unit 100 operates in cooperation with an internal combustion engine 400, which may be used to actuate various components in the refrigeration unit 100, for example. The internal combustion engine 400 may draw ambient air in the direction shown by arrow A8, for example. Having subjected to the combustion process in the internal combustion engine 400, the exhaust gas is discharged from the internal combustion engine and moves in the direction shown by arrow A7. The exhaust gas optionally passes through a muffler 410 and then establishes a thermal connection with the first side 210a of the thermoelectric module 210 through the second heat exchanger 320. At the same time, the ambient air is driven by the third fan 123 and moves in the direction shown by arrow A6, so as to establish a thermal connection with the second side 210b of the thermoelectric module 210. The temperature of the exhaust gas is typically significantly higher than the temperature of the ambient air, therefore it is possible to establish a stable temperature difference. The thermoelectric module 210 generates power with the temperature difference described above, and the power is stored and utilized by the control module 220 and the battery 230. At this point, the temperature at the first side 210a will be substantially higher than the temperature at the second side 210b. Thus, in the example shown in FIG. 4, the first side 210a is also referred to as the hot side, and the second side 210b is also referred to as the cold side.

The ambient air may be driven by the third fan 123. The third fan 123 may be a fan disposed outside the housing of the refrigeration unit, or a suitable fan in the refrigeration unit might be multiplexed to implement the function of the third fan 123.

The various embodiments and examples described above may be implemented alone or two or more embodiments and examples might be implemented in conjunction with each other. For example, multiple sets of thermoelectric modules may be provided in the refrigeration unit, and each set of thermoelectric modules may be constructed with the principle of one of the above-described embodiments or examples, respectively. The power generated by the multiple sets of thermoelectric modules may be collected into the same battery for driving the refrigeration unit.

By employing the refrigeration unit described herein, heat generated during operation of the refrigeration unit can be utilized to recover power. The recovered power is used for driving the refrigeration unit, thereby the energy consumption of the refrigeration unit is reduced, and the refrigeration efficiency of the refrigeration unit is increased. According to one embodiment, the power generation efficiency of the thermoelectric module depends on the temperature difference between the first side and the second side. The greater the temperature difference, the higher the power generation efficiency. According to one embodiment , where the thermoelectric module has a power generation efficiency of 1% to 4%, the refrigeration efficiency may be increased accordingly by 2% to 10%. The refrigeration unit described herein may be applied for conventional transportation vehicles using internal combustion engines, as well as electric vehicles that are driven by electric motors.

This description discloses embodiments of the present invention with reference to the accompany drawings, and also enables those skilled in the art to implement the present invention, including making and using any apparatus or systems, selecting suitable materials, and using any incorporated methods. The scope of the invention is set out in the appended claims.

## Claims

1. A refrigeration unit (100), comprising:
a refrigeration circuit including a compressor (110), a condenser (120), a thermal expansion valve (130), and an evaporator (140) connected into a loop; and
a heat recovery system comprising a thermoelectric module (210), a control module (220) and a battery (230);
wherein the thermoelectric module includes a first side (210a) and a second side (210b), the first side being configured to establish a thermal connection with a first heat source and the second side being configured to establish a thermal connection with a second heat source, the first heat source and the second heat source having different temperatures, the thermoelectric module being configured to generate power by the temperature difference between the first heat source and the second heat source;
wherein the control module is configured to store the power generated by the thermoelectric module to the battery, the battery being configured to drive the refrigeration circuit;
wherein the condenser comprises a condenser coil (120a) and a first fan (121) configured to deliver ambient air through the condenser coil;
**characterised in that** the first heat source and the second heat source are located on the flow path of the ambient air and are located on an upstream side and a downstream side of the condenser coil, respectively.

2. The refrigeration unit (100) of claim 1, wherein the heat recovery system is further configured to perform refrigeration with the thermoelectric module (210), so as to reduce the temperature of the ambient air located on the upstream side of the condenser coil (120a).

3. The refrigeration unit (100) of claim 1 or 2, wherein the thermoelectric module (210) is configured to be arranged about the perimeter of the condenser coil (120a).

## Patentansprüche

1. Kühleinheit (100), umfassend:
einen Kühlkreislauf, der einen Verdichter (110), einen Kondensator (120), ein Wärmeexpansionsventil (130) und einen Verdampfer (140) beinhaltet, die zu einer Schleife verbunden sind; und
ein Wärmerückgewinnungssystem, das ein thermoelektrisches Modul (210), ein Steuermodul (220) und eine Batterie (230) umfasst;
wobei das thermoelektrische Modul eine erste Seite (210a) und eine zweite Seite (210b) beinhaltet, wobei die erste Seite dazu konfiguriert ist, eine thermische Verbindung mit einer ersten Wärmequelle herzustellen, und die zweite Seite dazu konfiguriert ist, eine thermische Verbindung mit einer zweiten Wärmequelle herzustellen, wobei die erste Wärmequelle und die zweite Wärmequelle unterschiedliche Temperaturen aufweisen, wobei das thermoelektrische Modul dazu konfiguriert ist, durch den Temperaturunterschied zwischen der ersten Wärmequelle und der zweiten Wärmequelle Leistung zu erzeugen;
wobei das Steuermodul dazu konfiguriert ist, die durch das thermoelektrische Modul erzeugte Leistung in der Batterie zu speichern, wobei die Batterie dazu konfiguriert ist, den Kühlkreislauf anzutreiben;
wobei der Kondensator eine Kondensatorspule (120a) und einen ersten Lüfter (121) umfasst, der dazu konfiguriert ist, Umgebungsluft durch die Kondensatorspule zu fördern;
**dadurch gekennzeichnet, dass** sich die erste Wärmequelle und die zweite Wärmequelle an dem Strömungsweg der Umgebungsluft und auf einer stromaufwärts gelegenen Seite bzw. einer stromabwärts gelegenen Seite der Kondensatorspule befinden.

2. Kühleinheit (100) nach Anspruch 1, wobei das Wärmerückgewinnungssystem ferner dazu konfiguriert ist, eine Kühlung mit dem thermoelektrischen Modul (210) durchzuführen, um die Temperatur der Umgebungsluft, die sich auf der stromaufwärts gelegenen Seite der Kondensatorspule (120a) befindet, zu reduzieren.

3. Kühleinheit (100) nach Anspruch 1 oder 2, wobei das thermoelektrische Modul (210) dazu konfiguriert ist, um den Umfang der Kondensatorspule (120a) herum angeordnet zu sein.

## Revendications

1. Unité de réfrigération (100), comprenant :
un circuit de réfrigération comportant un compresseur (110), un condenseur (120), une soupape de dilatation thermique (130), et un évaporateur (140) connecté en boucle ; et
un système de récupération de chaleur comprenant un module thermoélectrique (210), un module de commande (220) et une batterie (230) ;
dans laquelle le module thermoélectrique comporte un premier côté (210a) et un second côté (210b), le premier côté étant conçu pour établir une connexion thermique avec une première source de chaleur et le second côté étant conçu pour établir une connexion thermique avec une seconde source de chaleur, la première source de chaleur et la seconde source de chaleur présentant des températures différentes, le module thermoélectrique étant conçu pour générer de l'énergie par la différence de température entre la première source de chaleur et la seconde source de chaleur ;
dans laquelle le module de commande est conçu pour stocker l'énergie générée par le module thermoélectrique vers la batterie, la batterie étant conçue pour piloter le circuit de réfrigération ;
dans laquelle le condenseur comprend un serpentin de condenseur (120a) et un premier ventilateur (121) conçus pour envoyer de l'air ambiant à travers le serpentin de condenseur ;
**caractérisée en ce que** la première source de chaleur et la seconde source de chaleur sont situées sur le trajet d'écoulement de l'air ambiant et sont situées respectivement sur un côté amont et un côté aval du serpentin de condenseur.

2. Unité de réfrigération (100) selon la revendication 1, dans laquelle le système de récupération de chaleur est en outre conçu pour procéder à une réfrigération avec le module thermoélectrique (210), de manière à réduire la température de l'air ambiant situé en amont du serpentin de condenseur (120a).

3. Unité de réfrigération (100) selon la revendication 1 ou 2, dans laquelle le module thermoélectrique (210) est conçu pour être disposé autour du périmètre du serpentin de condenseur (120a).
